# EUROPEAN PATENT APPLICATION

(11) **EP 2 228 673 A1**
(43) Date of publication of application: **15.09.2010**
(21) Application number: 09824516.0
(22) Date of filing: 07.08.2009
(51) Int. Cl.: G02B 6/00, G02B 6/024

(54) **PHOTONIC BANDGAP FIBER**

(30) Priority: 05.11.2008 JP 2008284468
(71) Applicant: Fujikura, Ltd., Tokyo 135-8512 (JP)
(72) Inventor: TAKENAGA, Katsuhiro, Sakura-shi Chiba 285-8550 (JP); GOTO, Ryuichiro, Sakura-shi Chiba 285-8550 (JP)
(74) Representative: Cabinet Plasseraud
(86) International application number: PCT/JP2009/003814
(87) International publication number: WO 2010/052815

(57) **Abstract**

A photonic bandgap fiber of the present invention functions as a polarization maintaining fiber, and includes: a core made from a solid material; a cladding provided around the core; a periodic structure region which is provided in a part of the cladding in a vicinity of the core and in which a plurality of high refractive index parts with a refractive index higher than that of the cladding are arranged in a periodic structure; a low refractive index region which is provided in another part of the cladding in a vicinity of the core and has an average refractive index lower than that of the core; and stress applying parts which are provided in a part of the low refractive index region close to the periodic structure region and have a thermal expansion coefficient different from that of another part of the low refractive index region.

## Description

### TECHNICAL FIELD

The present invention relates to a photonic bandgap fiber, and more particularly to a polarization maintaining fiber with large birefringence
Priority is claimed on Japanese Patent Application No. 2008-284468, filed on November 05, 2008, the contents of which are incorporated herein by reference.

### BACKGROUND ART

In recent years, high power fiber lasers using a rare-earth-doped optical fiber have been in the limelight. The high power fiber lasers have a structure in which signal light is amplified by pump light while the pump light and the signal light are propagating through a fiber. The characteristics of the apparatus include the fact that it can be cooled with ease and the fact that it can be reduced in size.
For an amplifying fiber used in such high power fiber lasers, the effect of a wavelength filter is desired in order to propagate signal light to be transmitted and also to cut off the propagation of light other than the signal light to be transmitted, for example, amplified spontaneous emission (ASE) and stimulated Raman scattering.
Furthermore, for high power fiber lasers with ultrashort pulses, a special wavelength dispersion property is desired in order to optimize the shapes of the pulses propagating through the fiber. As fibers with such a special property, there are known photonic bandgap fibers with a structure in which a periodic structure is arranged around the core, to thereby guide the light by Bragg reflection in accordance with the periodic structure.

Among the photonic bandgap fibers, solid photonic bandgap fibers whose cross-sections are all made from a solid material are preferably used because they allow for fusion splice with comparative ease and they can also be used as amplifying fibers with their core doped with rare earth, as described in Patent Documents 1 to 3 and Non-Patent Documents 1 and 2 (described later).

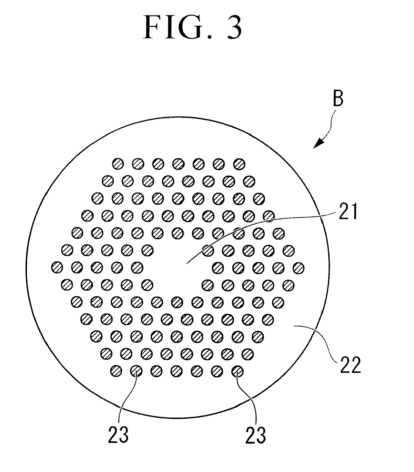

FIG. 3 is a cross-sectional view showing one example of a conventional solid photonic bandgap fiber B. In FIG. 3, 21 denotes a core, 22 denotes a cladding, 23 denote high refractive index parts with a refractive index higher than that of the cladding 22. In such a photonic bandgap fiber B, the high refractive index parts 23 with a refractive index higher than that of the cladding 22 is formed into a microstructured cladding with a periodic structure, to thereby guide the light by Bragg reflection.

In this type of photonic bandgap fiber, whether the mode in which a given wavelength propagates the core in the photonic bandgap fiber (core mode) is cut off or not is determined by whether a mode with an effective refractive index equal to that of the core mode is present in the microstructured cladding or not.
If a mode with an effective refractive index equal to that of the core mode is present in the microstructured cladding, the core mode mode-couples to the mode in the microstructured cladding with an effective refractive index equal to that of the core mode. This reduces the light power in the core, to thereby cut off the propagation of the light. On the other hand, if a mode with an effective refractive index equal to that of the core mode is not present in the microstructured cladding, the core mode does not mode-couple to a mode in the microstructured cladding. Therefore, it is possible for light to propagate through the core.

In such a photonic bandgap fiber, modification in structure of the core and the microstructured cladding and in their refractive index distribution makes it possible to control the wavelength of the mode present in the microstructured cladding with the effective refractive index equal to that of the core mode. Therefore, with the photonic bandgap fiber, it is possible to implement a fiber-type wavelength filter with a desired property.
In such a photonic bandgap fiber, only a two- or less-fold rotational symmetry is imparted to the cross-sectional structure of the photonic bandgap fiber or an additional stress applying part is provided to the photonic bandgap fiber, as described in the following Patent Documents 1 to 3 and Non-Patent Documents 1 and 2. Thereby, birefringence is produced by form birefringence or thermal stress, allowing the photonic bandgap fiber to function as a polarization maintaining fiber. One of the important indicators of a polarization maintaining fiber performance is a polarization crosstalk, which signifies how much energy has leaked from one polarization wave to the other polarization wave while light is propagating through the fiber. The smaller the value of the polarization crosstalk is, the higher the performance the polarization maintaining fiber has. In addition, the larger the birefringence is, the smaller the polarization crosstalk is. Therefore, also for photonic bandgap fibers, a variety of structures for producing large birefringence are under examination. Conventional-type polarization maintaining fibers have typical birefringence of 1.0×10⁻⁴ or greater. Accordingly, it is preferable that these photonic bandgap fibers also have birefringence of 1.0×10⁻⁴ or greater. Furthermore, in the case where the core of a photonic bandgap fiber is doped with rare earth to use the photonic bandgap fiber as a fiber amplifier, an energy difference equivalent to the difference between the pump light intensity and the signal light intensity is turned into heat. In this case, when the heat increases the temperature of the fiber to relieve the thermal stress in the fiber, the birefringence is lowered to worsen the polarization crosstalk. Therefore, in the case where a fiber mounted in a fiber laser or other equipment is used under elevated temperatures, it is preferable that the photonic bandgap fiber have larger birefringence at normal temperature, for example, birefringence of 3.0×10⁻⁴ or greater.

[Patent Document 1] Japanese Patent No. 3072842
[Patent Document 2] PCT International Patent Publication No. WO 2007/057024 pamphlet
[Patent Document 3] PCT International Patent Publication No. WO 2008/126472 pamphlet

[Non-Patent Document 1] Photonic crystal fibers confining light by both index-guiding and bandgap-guiding: hybrid PCFs, Limin Xiao, Wei Jin, and M. S. Demokan, Optics Express, Vol. 15, Issue 24, pp. 15637-15647 (2007)
[Non-Patent Document 2] Polarization Maintaining Hybrid TIR/Bandgap All-Solid Photonic Crystal Fiber, J. K. Lyngso, B. J. Mangan, and P. J. Roberts, Proceedings of CLEO 2008, CThV1

### DISCLOSURE OF INVENTION

### Problem to be solved by the Invention

However, conventional photonic bandgap fibers have a problem as follows.
In solid photonic bandgap fibers made from silica-based glass, high refractive index parts are doped with a dopant that significantly increase the thermal expansion coefficient such as germanium or aluminum. For example, as described in Patent Document 3, with thermal stress from the high refractive index parts, stress birefringence with only a two-fold rotational symmetry or less is produced, to thereby allow the solid photonic bandgap fiber to function as a polarization maintaining fiber. However, in such a fiber, if additional stress applying part(s) is(are) additionally provided so as to obtain larger birefringence, there is a possibility that applied stress is cancelled by the thermal stress from the high refractive index parts to prevent the production of sufficient birefringence in some arrangements of the stress applying part(s).
The present invention has been achieved in view of the above problem, and has an object to provide a photonic bandgap fiber capable of more efficiently producing birefringence by a stress applying part.

### Means for solving the Problem

To solve the above problem and achieve such an object, the present invention adopts the followings.
(1) A photonic bandgap fiber of the present invention functions as a polarization maintaining fiber, and includes: a core made from a solid material; a cladding provided around the core; a periodic structure region which is provided in a part of the cladding in a vicinity of the core and in which a plurality of high refractive index parts with a refractive index higher than that of the cladding are arranged in a periodic structure; a low refractive index region which is provided in another part of the cladding in a vicinity of the core and has an average refractive index lower than that of the core; and stress applying parts which are provided in a part of the low refractive index region close to the periodic structure region and have a thermal expansion coefficient different from that of another part of the low refractive index region.

(2) In the photonic bandgap fiber according to the above (1), the refractive index of the core may be not more than that of the cladding.
(3) In the photonic bandgap fiber according to the above (1), the periodic structure region may be such that the plurality of high refractive index parts are arranged in any of linear structure, triangular lattice structure, honeycomb lattice structure, square lattice structure, or rectangular lattice structure.

(4) In the photonic bandgap fiber according to the above (1), the periodic structure regions and the stress applying parts may be respectively arranged at positions symmetrical about the core.
(5) In the photonic bandgap fiber according to the above (1), the high refractive index parts, the low refractive index region, and the stress applying parts may be respectively doped with a dopant for adjusting refractive indices thereof; with the doping of the dopants, rates of increase of thermal expansion coefficient in the low refractive index region may be made lower than that of the high refractive index parts and the stress applying parts; and thermal stress with axial asymmetry may be applied to the core, to thereby introduce birefringence to the core.

### Advantage of the Invention

The photonic bandgap fiber according to the above (1) includes: a periodic structure region provided in the cladding in a vicinity of a core; a low refractive index region which is provided in another part of the cladding in a vicinity of the core and has an average refractive index smaller than that of the core; a stress applying part which is provided in a region of the low refractive index region close to the periodic structure region and has a thermal expansion coefficient different from that of another portion of the low refractive index region. Therefore, it is possible to efficiently produce birefringence with the stress applying part. Accordingly, it is possible to provide an optical fiber that functions as a polarization maintaining photonic bandgap fiber with large birefringence. Furthermore, the photonic bandgap fiber according to the above (1) also has the filter effect and the special wavelength dispersion property that are essentially provided in photonic bandgap fibers.

### BRIEF DESCRIPTION OF THE DRAWINGS

FIG. 1 is a cross-sectional view showing a first embodiment of a photonic bandgap fiber according to the present invention.
FIG. 2 is a graph showing a measurement result of transmission spectrum of a core in the photonic bandgap fiber of an example.
FIG. 3 is a cross-sectional view showing one example of a conventional photonic bandgap fiber.

### BEST MODE FOR CARRYING OUT THE INVENTION

Hereunder is a description of an embodiment of the present invention with reference to the drawings.

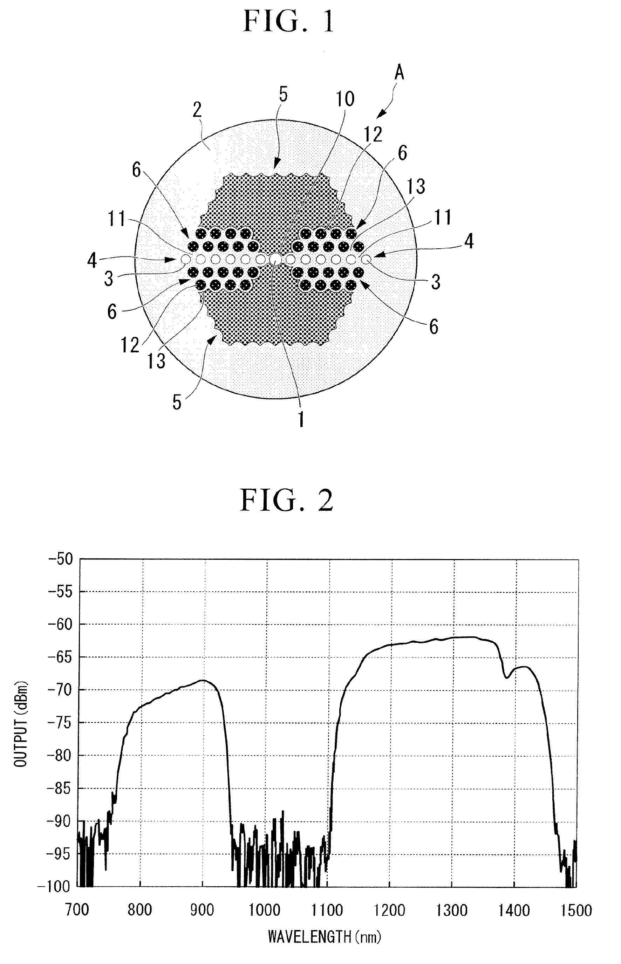

FIG. 1 is a cross-sectional view showing a first embodiment of a photonic bandgap fiber of the present invention. The photonic bandgap fiber A of the present embodiment includes: a core 1 made from a solid material; a cladding 2 provided around the core 1; a periodic structure region 4 which is provided in a part of the cladding 2 in a vicinity of the core 1 and in which a multitude of high refractive index parts 3 with a refractive index higher than that of the cladding 2 are arranged in a periodic structure; a low refractive index region 5 which is provided in another part of the cladding 2 in a vicinity of the core 1 and has an average refractive index lower than that of the core 1; and stress applying parts 6 which are provided in a part of the low refractive index region 5 close to the periodic structure region 4 and have a thermal expansion coefficient different from that of another part of the low refractive index region 5.

In the structure of FIG. 1, more particularly, at the central portion in the cross-section perpendicular to the longitudinal direction (the transverse section) of the photonic bandgap fiber A, there is provided a core 1 with a circular cross-section. The circumference of the core 1 is covered with a coating layer 10. Furthermore, in the photonic bandgap fiber A, there are formed periodic structure regions 4 on both sides (on both sides in the radial direction of the photonic bandgap fiber A) of the core 1 located at its center. Each of the periodic structure regions 4 has a plurality of (six on one side, in the exemplary illustration of FIG. 1) high refractive index parts 3 with a circular cross-section arranged in a row in an evenly spaced manner so as to have a periodic structure. The circumference of every high refractive index part 3 is covered with a coating layer 11.
Furthermore, in FIG. 1, for the high refractive index parts 3 arranged in a row on both sides of the core 1, there are provided low refractive index stress applying parts 6 at positions sandwiching the row from both sides. The stress applying parts 6 are arranged at positions symmetrical about the core 1. In this exemplary illustration, in each of the stress applying parts 6, two rows of low refractive index parts 12 with a circular cross-section are arranged so as to be in triangular lattice positions with respect to the aforementioned high refractive index parts 3 arranged in a low, with the two rows being staggered. The circumference of every low refractive index part 12 is covered with a coating layer 13. That is, in the present embodiment, the high refractive index parts 3 and the low refractive index parts 12 are arranged around the core 1 so as to be placed in triangular lattices.
In the present embodiment, each periodic structure region 4 is made of six high refractive index parts 3 arranged in a row. Accordingly, five low refractive index parts 12 are arranged as each of the first rows closest to the above row, and four low refractive index parts 12 are arranged as each of the second rows. However, the number of these parts and the row structures are appropriately selected according to the materials for these parts and the wavelength of light to be guided through the photonic bandgap fiber.
The outermost edge portions of the high refractive index parts 3 arranged in a row on both sides of the core 1 and the outermost edge portions of the low refractive index parts 12 adjacent thereto are all arranged in the inner layer portion of the cladding 2.
In the part other than the above around the core 1, that is, in the region where no high refractive index parts 3 and no low refractive index parts 12 are arranged, and on the circumference of the stress applying parts 6, there is formed a low refractive index region 5 that extends as far as to the part on the inner layer of the cladding 2.
In the present embodiment, the low refractive index region 5 has a rough hexagonal outline in its transverse section. It is arranged at the center of the inner portion of the cladding 2 with a circular transverse section. The core 1 is arranged at the center of the low refractive index region 5. In the left and right side portions in the transverse section of the low refractive index region 5 with a rough hexagonal outline in its transverse section, the periodic structure region 4, the stress applying parts 6, and the coating layers 10, 11, 13 that are positioned therearound are embedded so as to occupy the area approximately a fraction of that of the transverse area of the low refractive index region 5. In the areas where the periodic structure regions 4, the stress applying parts 6, and the coating layers 10, 11, 13 are provided, no low refractive index region 5 is provided.
In the structure of the present embodiment, the coating layer 11 is essential. However, to achieve the object of the present invention, the coating layer 10 and the coating layer 13 are not necessarily essential constituent elements. The coating layers 10, 13 may be omitted, with the coating layer 10 being replaced by the same medium as that of the core 1 and the coating layer 13 being replaced by the same medium as that of the stress applying part 6.

In the embodiment shown in FIG. 1, the core 1, the low refractive index region 5, the periodic structure regions 4, the cladding 2, and the coating layers 10, 11, 13 are made from pure silica glass, or silica-based glass in which pure silica glass is doped with a dopant for adjusting a refractive index such as fluorine (F), germanium (Ge), aluminum (A1), or boron (B).
To illustrate more specifically, the core 1 and the cladding 2 are made from pure silica. The high refractive index part 3 is made from pure silica doped with a dopant such as germanium so as to have a relative refractive index difference of + several % from pure silica. The low refractive index region 5 is made from pure silica doped with a dopant such as fluorine so as to be adjusted to a relative refractive index difference on a negative value side from pure silica. The stress applying part 6 is made from pure silica doped with a dopant such as boron so as to have a low refractive index that is adjusted to a relative refractive index difference on a negative value side from pure silica. If the high refractive index part 3 is doped with germanium, its thermal expansion coefficient increases. If the stress applying part 6 is doped with boron, its thermal expansion coefficient increases. On the other hand, even if the low refractive index region 5 is doped with fluorine, the ratio at which its thermal expansion coefficient increases is small compared with the cases of germanium and boron. Each of the coating layers 10, 11, 13 is made from pure silica.
In the photonic bandgap fiber A of the present embodiment, the materials for the constituent parts are exemplary. They are not limited to those illustrated in the present embodiment.

The photonic bandgap fiber A of the present embodiment is a photonic bandgap fiber where both of the periodic structure regions 4 that implement wave guiding by a photonic bandgap by use of a periodic structure and a region that implements refractive index guiding by possession of an average refractive index not more than that of the core 1 (the low refractive index region 5) are arranged around the core 1.
In the photonic bandgap fiber A of the present embodiment, the regions of the low refractive index region 5 that are close to the high refractive index parts 3 (the stress applying parts 6) have a thermal expansion coefficient higher than that of the other part of the low refractive index region 5, and are arranged symmetrically about the core 1. When an optical fiber, which has been formed by heat-drawing a glass preform at high temperatures, is cooled to normal temperature, stress is applied from the stress applying parts 6 toward the core 1. With the stress, birefringence is produced in the core 1. Thereby, a polarization maintaining property is obtained. Therefore, the photonic bandgap fiber A with the above structure is capable of functioning as a polarization maintaining fiber. In this case, the direction of the thermal stress produced by the low refractive index region 5 is the same as that of the thermal stress produced by the high refractive index parts 3. Accordingly, since the thermal stresses of both do not cancel each other, their birefringence is not reduced.

In the photonic bandgap fiber A of the present embodiment, the periodic structure regions 4 that capable of wave guiding by the photonic bandgap are present in other regions around the core 1. As a result, the photonic bandgap fiber A still has the filter effect and the special wavelength dispersion property that are characteristic of the photonic bandgap fiber A. Accordingly, with the suppression of amplified spontaneous emission, it is possible to easily modify the emission wavelength of the fiber laser and to suppress the stimulated Raman scattering. Furthermore, it is possible to optimize the shapes of the pulses propagating through the fiber.
Therefore, according to the structure of the present embodiment, it is possible to implement a polarization maintaining solid photonic bandgap fiber A with large birefringence.

If the high refractive index part is doped with a high-concentration dopant, the high refractive index part can have a thermal expansion coefficient equal to or greater than that of the stress applying parts. Consequently, also in a structure where the stress applying parts 6 of the photonic bandgap fiber A of the present embodiment is replaced with high refractive index parts, birefringence can be produced similarly. However, in this case, it follows that a greater number of high refractive index parts are present in the cross-sectional structure of the photonic bandgap fiber A. As a result, in the case where this fiber is used as a double-clad fiber, pump light is confined in the high refractive index parts by the index guiding, leading to an increase in the proportion of the pump light that is not absorbed in the core. This lowers the excitation efficiency of the fiber amplifier and the fiber laser.
The photonic bandgap fiber of the present invention is capable of providing a photonic bandgap fiber A that has large birefringence with a small number of high refractive index parts 3. Therefore, the photonic bandgap fiber can be favorably used as a double-clad fiber.
Furthermore, also in the case where the thermal stress produced in the core 1 by the high refractive index parts 3 is not sufficiently larger than that produced by the low refractive index region 5 because of a comparatively small relative refractive index difference of the high refractive index parts 3 from the cladding 2 or a small cross-section of the high refractive index parts 3, it is possible to implement a polarization maintaining photonic bandgap fiber with large birefringence by use of the structure of the photonic bandgap fiber A of the present invention. In addition, its birefringence is larger than that in the case where the stress applying parts are arranged in lines in a direction orthogonal to the alignment of the high refractive index parts.

The photonic bandgap fiber A of the present embodiment is a solid-core photonic bandgap fiber in which the core 1 is made from a solid material (silica-based glass). The core 1 may be doped with a rare-earth element such as ytterbium or erbium.
Furthermore, the photonic bandgap fiber A of the present embodiment has a complete solid structure with no air holes. Therefore, when the photonic bandgap fiber A of the present embodiment is fusion-spliced with another optical fiber, the holes will never collapse and change their structure. Consequently, the photonic bandgap fiber A has an advantage of being capable of fusion-splicing with another optical fiber at a low loss and the like. Furthermore, the core 1 is circular and the low refractive index region 5 is homogeneous. Therefore, in the core 1 and the low refractive index region 5, the electric field distribution of the core mode is similar to that of a conventional fiber with a circular core. Accordingly, the photonic bandgap fiber A of the present embodiment has an advantage of being capable of reducing a connection loss with a conventional fiber.
Note that the photonic bandgap fiber A according to the present invention may have a structure in which any portion other than the core 1 is provided with air holes.
In addition, in the photonic bandgap fiber A according to the present invention, the arrangement structure of the periodic structure regions 4, the low refractive index region 5, and the stress applying parts 6 are not limited to the present illustration, and can be subject to optional modification. Furthermore, the arrangement of the high refractive index parts 3 in the periodic structure regions 4 is not limited to the linear structure. Obviously, the high refractive index parts 3 may be arranged in any structure including triangular lattice structure, honeycomb lattice structure, square lattice structure, and rectangular lattice structure that function as a photonic bandgap structure.

### EXAMPLES

Hereunder is a description of an example of the present invention. However, it is obvious that the present invention is not limited to the following example. A photonic bandgap fiber with a structure shown in FIG. 1 was fabricated. In the fabricated structure, a core made from pure silica with a diameter d of 7.3 µm was surrounded by a cladding made from pure silica. Around the core, there were formed: a region in which high refractive index parts with a diameter dh of 4 µm are aligned with a period of 7.3 µm, the high refractive index parts having a relative refractive index difference Δh of +2.8% from pure silica; a region in which low-refractive-index stress applying parts with a diameter dh of 5 µm are arranged in a triangular lattice structure, the stress applying parts having a relative refractive index difference Δh of -0.5% from pure silica; and a low refractive index region having a relative refractive index difference Δ1 of -0.35% from pure silica. It was configured such that the high refractive index parts and the stress applying parts were surrounded by a coating layer made from pure silica.

When the birefringence of the photonic bandgap fiber of the example was measured, the birefringence was 3.8×10⁻⁴ at a wavelength of 1200 nm, and 6.7×10⁻⁴ at a wavelength of 1400 nm. Thus, the photonic bandgap fiber had sufficient birefringence for a polarization maintaining fiber. The reason is that, both of germanium (Ge) used as a dopant for the high refractive index parts and boron (B) used as a dopant for the low refractive index stress applying parts significantly increased the thermal expansion coefficient of silica, whereas fluorine (F) used as a dopant for the low refractive index region had an effect of slightly increasing the thermal expansion coefficient of silica. Therefore, large thermal stress with axial asymmetry was produced in the core, to thereby produce stress-induced birefringence.

Next, 1 m of the photonic bandgap fiber was taken out. White light was launched into its core, and transmission wavelength was measured. The result is shown in FIG. 2.
As shown in FIG. 2, in the present example, light at wavelengths of 750 nm to 950 nm and wavelengths of 1150 nm to 1450 nm passed, and light at the other wavelengths was cut off. Consequently, the fiber of the example had a wavelength filter property specific to photonic bandgap fibers.
On the other hand, the structure in which the low refractive index stress applying parts of the photonic bandgap fiber with the above structure was replaced with a low refractive index region had birefringence of 2.1×10⁻⁴ at a wavelength of 1200 nm, and birefringence of 0.78×10⁻⁵ at a wavelength of 1400 nm. Furthermore, in the case where the low refractive index stress applying parts were arranged in lines in the direction orthogonal to the alignment of the high refractive index parts in the photonic bandgap fiber with the above structure, the thermal stress from the high refractive index parts and the thermal stress from the low-refractive-index stress applying parts cancelled each other. Thus, obtained birefringence was less than 1.0×10⁻⁴ at wavelengths of both 1200 nm and 1400 nm.

If the relative refractive index difference of the core from the cladding is not more than 0% in the structure of the present example, the effective refractive index in the core mode is not more than the refractive index of the homogeneous cladding provided around the outer circumference of the microstructure made of the high refractive index parts. Therefore, at a wavelength at which propagation in the core mode is cut off, the mode in the microstructured cladding which is mode-coupled from the core mode is a leaky mode. Accordingly, light that has mode-coupled from the core to the microstructured cladding immediately leaks into the homogeneous cladding, resulting in an increased cutoff effect in the core mode at cutoff wavelengths.

On the other hand, if the relative refractive index difference of the core from the cladding is more than 0% in the structure of the present example, the effective refractive index in the core mode is larger than the refractive index of the homogeneous cladding. Consequently, at wavelengths at which propagation in the core mode is cut off, the mode which is mode-coupled from the core, that is, the mode in the microstructured cladding made of high refractive index parts is a propagation mode. Therefore, light that has mode-coupled from the core mode to the microstructured cladding propagates through the microstructured cladding, and again mode-couples to the core mode.
As a result, the cutoff effect in the core mode is decreased. However, even in such a case, if the refractive index of the core is not so large compared with that of the homogeneous cladding, a large bend loss is produced in the mode of the aforementioned microstructured cladding only with an unavoidable level of bend that occurs when the photonic bandgap fiber of the present invention is used. This significantly decreases the phenomenon of mode-coupling again to the core mode.
Therefore, it is possible to obtain a cutoff effect of the core mode to essentially the same extent as the case where the relative refractive index difference of the core from the cladding is not more than 0%. To be more specific, if the relative refractive index difference of the core from the cladding (pure silica) is more than 0% and not more than approximately 0.1%, it is possible to obtain a cut off effect of the core mode to the approximately same extent as the case where the relative refractive index difference of the core from the cladding is not more than 0% of the photonic bandgap fiber according to the present invention. If the relative refractive index difference of the core from the cladding is not less than 0.1 %, the cutoff effect is decreased. However, if the refractive index of the core is smaller than that of the high refractive index parts, the cutoff effect is exhibited. If a large cutoff effect is not necessary, the relative refractive index difference of the core from the cladding may be not less than 0.1 %. In that case, an increase in the refractive index of the core by an addition of rare earth or the like need not be canceled by codoping of a dopant such as F for decreasing the refractive index. Therefore, the fabrication of this fiber becomes easily.

### INDUSTRIAL APPLICABILITY

According to the present invention, it is possible to obtain an optical fiber that functions as a polarization maintaining photonic bandgap fiber with large birefringence.

### DESCRIPTION OF THE REFERENCE SYMBOLS

A: photonic bandgap fiber
1: core
2: cladding
3: high refractive index part
4: periodic structure region
5 low refractive index region
6: stress applying part
10, 11, 13: coating layer
12: low refractive index part

## Claims

1. A photonic bandgap fiber that functions as a polarization maintaining fiber, comprising:
a core made from a solid material;
a cladding provided around the core;
a periodic structure region which is provided in a part of the cladding in a vicinity of the core and in which a plurality of high refractive index parts with a refractive index higher than that of the cladding are arranged in a periodic structure;
a low refractive index region which is provided in another part of the cladding in a vicinity of the core and has an average refractive index lower than that of the core; and
stress applying parts which are provided in a part of the low refractive index region close to the periodic structure region and have a thermal expansion coefficient different from that of another part of the low refractive index region.

2. The photonic bandgap fiber according to claim 1, wherein
the refractive index of the core is not more than that of the cladding.

3. The photonic bandgap fiber according to claim 1, wherein
the periodic structure region is a structured region in which the plurality of high refractive index parts are arranged in any of linear structure, triangular lattice structure, honeycomb lattice structure, square lattice structure, or rectangular lattice structure.

4. The photonic bandgap fiber according to claim 1, wherein
the periodic structure regions and the stress applying parts are respectively arranged at positions symmetrical about the core.

5. The photonic bandgap fiber according to claim 1, wherein
the high refractive index parts, the low refractive index region, and the stress applying parts are respectively doped with a dopant for adjustment of refractive indices thereof;
with the doping of the dopants, rates of increase of thermal expansion coefficient in the low refractive index region is made lower than those of the high refractive index parts and the stress applying parts; and
a thermal stress with axial asymmetry is applied to the core, to thereby introduce birefringence to the core.
